# EUROPÄISCHE PATENTSCHRIFT

(11) **EP 0 508 300 B1**
(45) Veröffentlichungstag und Bekanntmachung des Hinweises auf die Patenterteilung: **02.08.1995**
(21) Anmeldenummer: 92105637.0
(22) Anmeldetag: 01.04.1992
(51) Int. Cl.: H02G 7/05

(54) **Aufhängevorrichtung für eine Luftkabelgarnitur**
Suspension device for overhead cable set
Dispositif pour suspendre un ensemble de câbles aériens

(30) Priorität: 09.04.1991 DE 4111484
(43) Veröffentlichungstag der Anmeldung: 14.10.1992
(73) Patentinhaber: RXS Schrumpftechnik-Garnituren GmbH, D-58093 Hagen (DE)
(72) Erfinder: Behrendt, Martin, W-5800 Hagen 1 (DE); Greisinger, Martin, W-5860 Iserlohn (DE); Winterhoff, Hans, W-5840 Schwerte (DE)
(74) Vertreter: Fuchs, Franz-Josef, Dr.-Ing.

(56) Entgegenhaltungen:
- DE-A- 3 803 335
- DE-B- 1 640 691
- DE-B- 2 916 734
- US-A- 4 992 627

## Beschreibung

Die Erfindung betrifft eine Aufhängevorrichtung für eine Luftkabelgarnitur an einem Tragseil mit einem Einhängeteil zum Aufhängen an das Tragseil und einem Montageansatz zum Befestigen der Luftkabelgarnitur, wobei das Einhängeteil als Haken ausgebildet ist, das Einhängeteil eine Aushubsicherung aufweist und der Montageansatz einen Befestigungsflansch zum seitlichen Ansatz an einen stirnseitigen Dichtungskörper der Luftkabelgarnitur aufweist.

Tragseilaufhängungen dieser Art sind beispielsweise bekannt aus der deutschen Offenlegungsschrift 38 05 257. Dort wird eine Aufhängevorrichtung zum Befestigen einer aus stirnseitigen Dichtungskörpern und einem Muffenrohr bestehenden Kabelmuffe am Tragseil eines Luftkabels beschrieben, wobei entsprechende Eingriffsmittel an den stirnseitigen Abschlüssen der Kabelmuffe vorgesehen sind. Diese Eingriffsmittel sind einerseits am Tragseil mit Hilfe eines Klemmteils angeklemmt und greifen andererseits in entsprechende Profile der Kabelmuffe stirnseits ein. Hier sind sommit mehrere Montageschritte zur Festlegung der Aufhängevorrichtung nötig.

Aus der DE-A-38 03 335 ist eine Aufhängevorrichtung zum Befestigen einer Kabelmuffe am Tragseil eines Luftkabels bekannt. Diese besteht aus zwei abgewinkelten Hängebügeln mit Befestigungsmitteln für das Tragsseil und aus Eingriffsmitteln für den Eingriff an den stirnseitigen Dichtungskörpern der Kabelmuffe. Die Herstellung einer solchen Aufhängevorrichtung umfaßt mehrere Einzelteile, die auf eine spezielle Muffenkopfform abgestimmt sind.

Für vorliegende Erfindung ergibt sich die Aufgabe, eine Aufhängevorrichtung für eine Luftkabelgarnitur zu schaffen, die mit wenigen Handgriffen zu montieren ist, wobei entsprechende Sicherheit gegen selbsttätiges Aushängen gewährleistet sein muß. Die gestellte Aufgabe wird gemäß der Erfindung mit Hilfe einer Aufhängevorrichtung der eingangs erläuterten Art dadurch gelöst, daß das Einhängeteil aus bandförmigem Material besteht.

Vorteile sind an der Erfindung gegenüber dem Stand der Technik in erster Linie darin zu sehen, daß diese aus bandförmigem Material hergestellten Aufhängevorrichtungen in den einfachsten Ausführungsformen durch Ausstanzungen und Biegungen die entsprechenden Funktionsteile gebildet werden können. Bei den in den abhängigen Ansprüchen offenbarten besonderen Ausführungsarten der Erfindung werden beispielsweise die Einhängeteile durch hakenförmige Ausstanzungen gebildet, bei denen durch Abbiegungen Auflagen bzw. Flansche für Aushubsicherungen geschaffen werden. Diese Aushubsicherungen bestehen in einfachster Weise aus Schraubelementen, die so angeordnet sind, daß mit ihnen nach dem Einhängevorgang durch Eindrehen die Einführungsöffnung verengt wird. Durch diese Verengung wird erreicht, daß das Tragseil nicht mehr aus der hakenförmigen Öffnung herausspringen kann. Durch entsprechende einfache Zusätze, wie Verbreiterungen im Hängebereich können zusätzliche Verbesserungen bezüglich der Sicherheit und des Schutzes erreicht werden.

Außerdem werden in weiteren Ausgestaltungen der Erfindung die Montageansätze am Einhängeteil so gestaltet, daß die Aufhängevorrichtungen an den Stirnseiten der Kabelgarnituren befestigt werden können. Auf diese Weise ist gewährleistet, daß die Kabelgarnitur im aufgehängten Zustand geöffnet werden kann. So ist es auch möglich, daß die Kabelgarnitur bei der Erstmontage zuerst ohne Innenmontage am Tragseil aufgehängt werden kann. Dadurch vereinfachen sich die Spleißarbeiten, da sich die Kabelgarnitur bereits in der Endlage befindet.

Die Erfindung wird nun anhand von Ausführungsbeispielen in vierzehn Figuren näher erläutert.
- Figur 1: zeigt das Prinzip der Aufhängung von Kabelgarnituren gemäß der Erfindung.
- Figur 2: zeigt eine in der Länge verstellbare Aufhängevorrichtung.
- Figur 3: zeigt die Aufhängevorrichtung nach Figur 2 in Seitenansicht.
- Figur 4: zeigt die Aufhängevorrichtung nach Figur 2 in einer Schnittdarstellung.
- Figur 5: zeigt eine Aufhängevorrichtung mit zwei Haken.
- Figur 6: zeigt eine Aufhängevorrichtung mit verbreitertem Aufhängehaken.
- Figur 7: zeigt die Aufhängevorrichtung nach Figur 6 in Seitenansicht.
- Figur 8: zeigt eine Aufhängevorrichtung mit seitlich ausgebogenen Flanschen für den Ansatz von Aushubsicherungen.
- Figur 9: zeigt die Aufhängevorrichtung nach Figur 8 in Seitenansicht.
- Figur 10: zeigt eine Aufhängevorrichtung mit einer angeschweißten Verstärkung im Hakenbereich.
- Figur 11: zeigt die Aufhängevorrichtung nach Figur 10 in Seitenansicht.
- Figur 12: zeigt eine Aufhängevorrichtung mit angenieteter Verstärkung im Hakenbereich.
- Figur 13: zeigt eine bandförmige Aufhängevorrichtung, bei welcher der Montageansatz um 90° gegenüber dem Einhängeteil verdreht ist.
- Figur 14: zeigt ein Ausführungsbeispiel mit federnder Aushubsicherung.

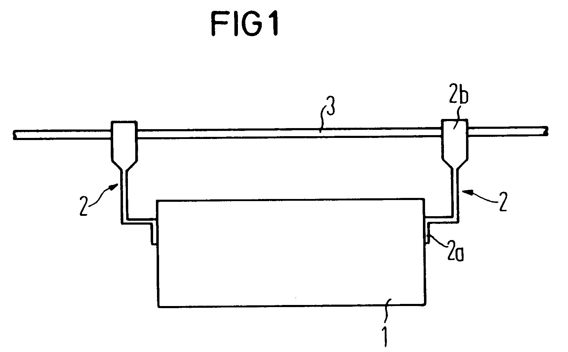

In Figur 1 wird das Prinzip der Aufhängevorrichtungen 2 gemäß der Erfindung erläutert. Es ist dabei ersichtlich, daß die beiden Aufhängevorrichtungen 2 mit ihren Montageansätzen 2a an den Stirnseiten der Kabelgarnitur 1 angesetzt sind und daß die Einhängeteile 2b am Tragseil 3 eingehängt sind.

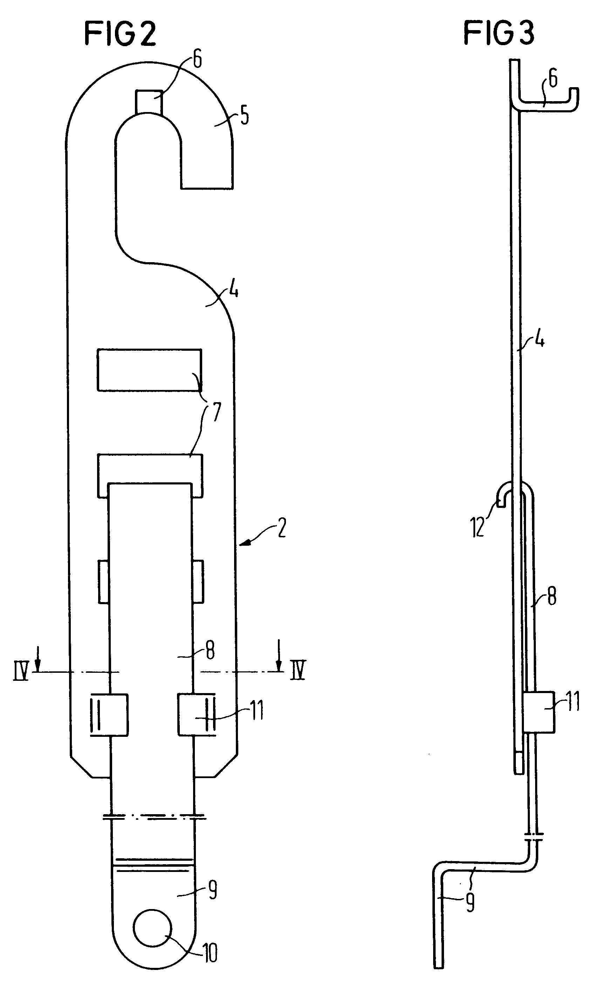

Figur 2 zeigt eine längenverstellbare Aufhängevorrichtung 2, die aus einem bandförmigen Einhängeteil 4 besteht, die am oberen Ende als Haken 5 ausgebildet ist. Außerdem befindet sich hier ein abgebogener Flansch 6, damit das Tragseil nicht beschädigt wird. Am bandförmigen Einhängeteil 4 sind weiterhin Ausstanzungen 7 eingebracht, in welche je nach gewünschter Länge die in Führungen 11 verschiebbare Verlängerung 8 mit dem abgebogenen Montageansatz 9 eingerastet werden kann. Die Bohrung 10 dient zur Befestigung an der Kabelgarnitur.

Die Figur 3 zeigt die Aufhängevorrichtung 2 nach Figur 2 in Seitenansicht. Hieraus wird deutlich, daß die Verlängerung 8 mit einem hakenförmigen Ende 12 in den Ausstanzungen 7 eingesetzt ist. Außerdem ist die Abwinkelung des Montageansatzes 9 erkennbar, der beispielsweise in den Biegeecken verstärkt ist.

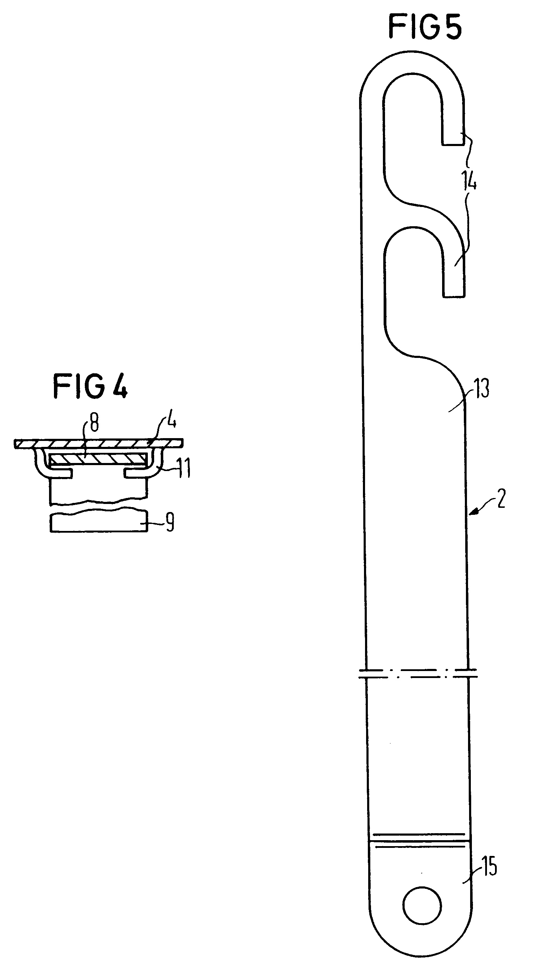

Die Figur 4 macht den Verlauf der Verlängerung 8 in den Führungen 11 deutlich.

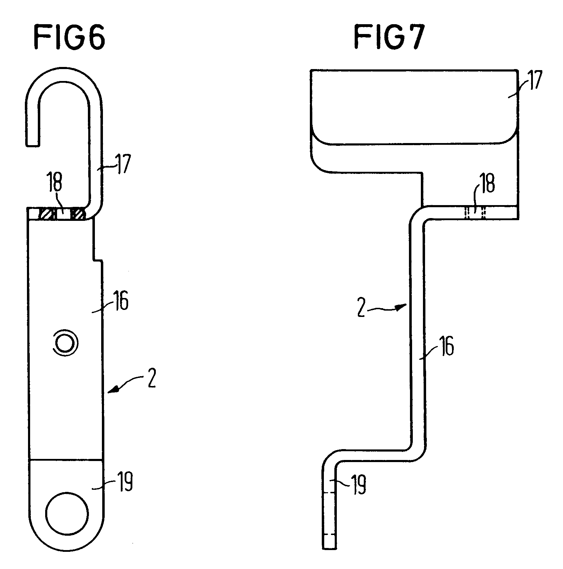

In Figur 5 ist eine Aufhängevorrichtung 2 gezeigt, deren Einhängeteil 13 aus zwei untereinander liegenden Haken 14 besteht, so daß die Höhe des Einhängens durch die Wahl des jeweiligen Hakens 14 bestimmt werden kann. Im unteren Teil ist wiederum der Montageansatz 15 abgewinkelt.

Die Figur 6 verdeutlicht ein Ausführungsbeispiel für eine Aufhängevorrichtung 2 mit einem bandförmigen Einhängeteil 16, an dem im oberen Bereich ein querstehender Haken 17 angeordnet ist. Hierdurch wird die Auflagefläche am Tragseil vergrößert. Außerdem ist in einer Abwinkelung ein Gewinde 18 eingebracht, in welches als Aushubsicherung eine Schraube eingeführt ist. Im unteren Teil ist der Montageansatz 19 mit Bohrung angegeben.

Die Figur 7 zeigt die Aufhängevorrichtung 2 in Seitenansicht, so daß hier der verbreiterte Haken 17 und die Position des Gewindes 18 für die Aushubsicherung deutlich werden. Die ins Gewinde einzudrehende Schraube verengt die Einführungsöffnung für das Tragseil, so daß dieses nicht mehr herausspringen kann. Mit Hilfe der Schraube kann zusätzlich eine Lagefixierung am Tragseil vorgenommen werden. Dies gilt auch für alle anderen Ausführungsbeispiele.

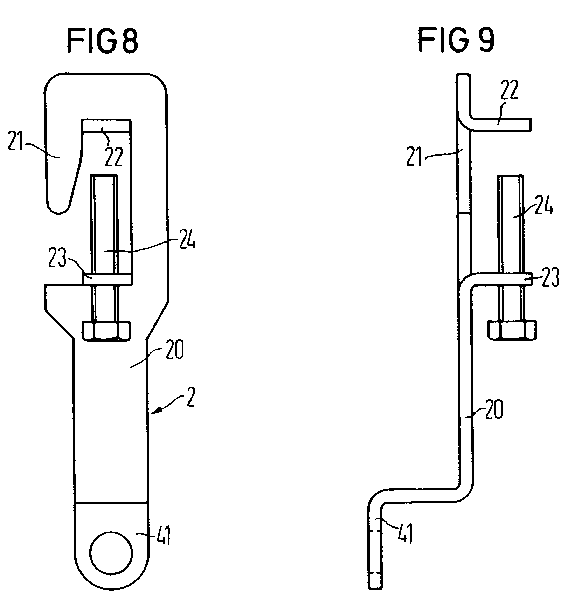

Figur 8 zeigt ein weiteres Ausführungsbeispiel einer Aufhängevorrichtung 2, die wiederum aus bandförmigem Material besteht. Das Einhängeteil 20 besteht aus einer hakenförmigen Ausstanzung 21, wobei die Ausstanzungen seitlich als Flansch 22 und 23 ausgebogen sind. In einem dieser Flansche 23 ist eine Schraube 24 als Aushubsicherung eingedreht. Im unteren Teil befindet sich der Montageansatz 41 mit Bohrung.

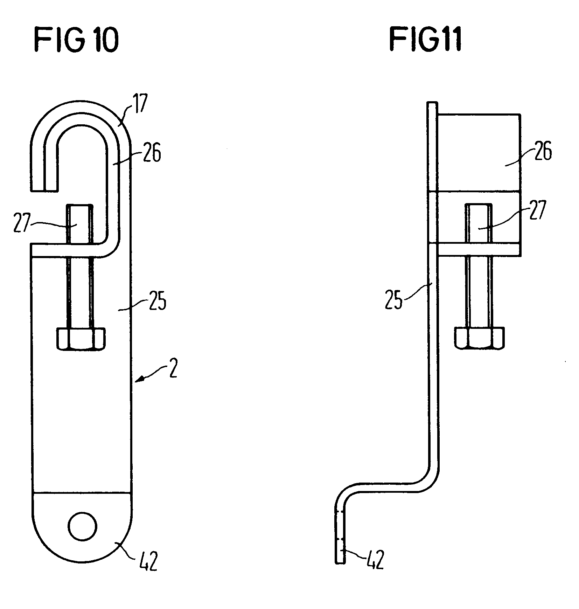

Die Figur 9 zeigt in einer Seitenansicht das Ausführungsbeispiel nach Figur 8, wobei hier besonders die Ausbildung der Aushubsicherung mit den Flanschen 22 und 23, sowie der Schraube 24 in Erscheinung tritt.

Die Figur 10 zeigt eine Aufhängevorrichtung 2, deren Haken 17 im Einhängebereich mit einer bandförmigen Verstärkung 26 versehen ist, so daß hier die Auflagefläche zum Tragseil vergrößert ist. Diese Verstärkung 26 ist auch im unteren Bereich der Einhängeöffnung angesetzt, so daß sie hier gleichzeitig als Flansch für die Aushubsicherung mit der Schraube 27 dienen kann. Im unteren Bereich der als Band 25 ausgebildeten Aufhängevorrichtung 2 befindet sich der Montageansatz 42 mit Bohrung.

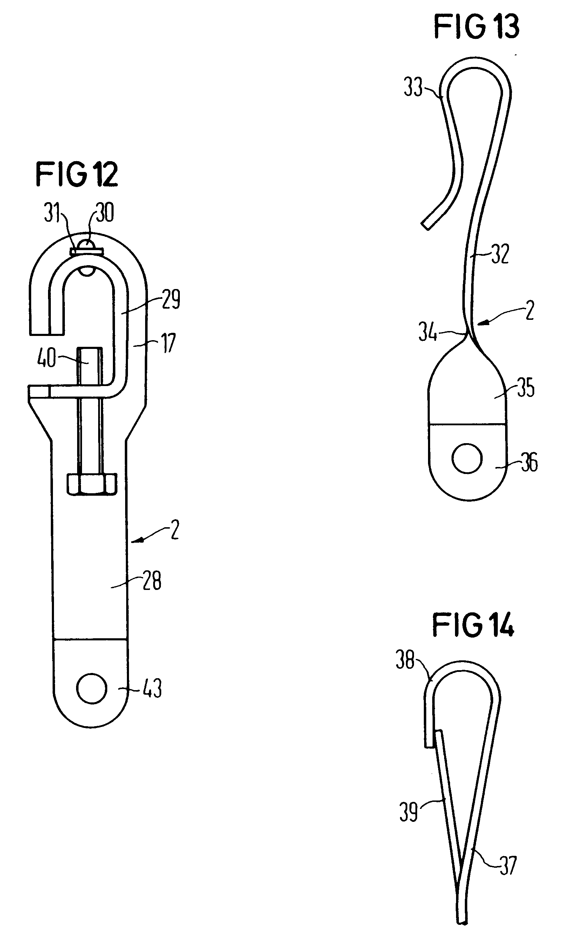

Die Figur 11 verdeutlicht in Seitenansicht das Ausführungsbeispiel nach Figur 10, wobei hier erkennbar wird, daß die Verstärkung 26 am Einhängeteil 25 angeschweißt ist.

Die Figur 12 zeigt ein Ausführungsbeispiel, das dem in Figur 10 gezeigten ähnlich ist. Unterschiedlich ist hier lediglich, daß die Verstärkung 29 am Einhängeteil 28 mit Hilfe von Nieten 30 befestigt ist, die in Abwinkelungen 31 eingreifen. Die Aushubsicherung ist wiederum als Schraube 40 ausgebildet und der Montageansatz 43 ist wie bei den vorangegangenen Beispielen als Abwinkelung vorgesehen.

Figur 13 zeigt ein Ausführungsbeispiel für eine Aufhängevorrichtung 2, bei der das bandförmige Material am Einhängeteil 32 im unteren Bereich 34 um 90° gedreht ist. Dadurch ist im Bereich des Hakens 33 eine breitflächige Auflage entsprechend der Breite des bandförmigen Materials am Tragseil gegeben, ohne daß zusätzliche Verbreiterungen wie bei vorherigen Ausführungsbeispielen angesetzt werden müssen. Außerdem ist das Hakenende 33 zum Mittelteil 32 federnd zurückgebogen und zwar so weit, daß das Einhängen am Tragseil nur durch Auffedern des Hakenendes 33 möglich ist. Nach dem Einführen federt das Hakenende 33 wieder zurück, wodurch sich gleichzeitig die Aushubsicherung ergibt. Im unteren, um 90° gedrehten Bereich 35 der Aufhängevorrichtung 2 ist der Montageansatz 36 abgebogen.

Die Figur 14 zeigt eine Alternativlösung zum Ausführungsbeispiel nach Figur 13. Hier wird statt des zurückfedernden Hakenendes eine Art Karabinerhaken verwendet, bei dem am Haken 38 ein Federteil 39 die Einführungsöffnung so abschließt, daß ein selbsttätiger Aushub von innen her nicht erfolgen kann. Das Einführen des Tragseiles hingegen erfolgt durch Gegendruck von außen her auf das Federteil 39, welches nach Einführung zurückschnappt.

## Patentansprüche

1. Aufhängevorrichtung für eine Luftkabelgarnitur an einem Tragseil mit einem Einhängeteil zum Aufhängen an das Tragseil und einem Montageansatz zum Befestigen der Luftkabelgarnitur, wobei das Einhängeteil (4, 13, 16, 20, 25, 28, 32, 37) als Haken (5, 14, 17, 21, 33, 38) ausgebildet ist, das Einhängeteil (4, 13, 16, 20, 25, 28, 32, 37) eine Aushubsicherung (6, 24, 27, 33, 39, 40) aufweist und der Montageansatz (9, 15, 19, 36, 41, 42, 43) einen Befestigungsflansch zum seitlichen Ansatz an einen stirnseitigen Dichtungsksörper der Luftkabelgarnitur aufweist,
**dadurch gekennzeichnet**,
daß das Einhängeteil (4, 13, 16, 20, 25, 28, 32, 37) aus bandförmigem Material besteht.

2. Aufhängevorrichtung nach Anspruch 1,
**dadurch gekennzeichnet**,
daß die Aushubsicherung als Schraube (24, 27, 40) ausgebildet und so angeordnet ist, daß mit ihr nach Aufhängung die Einführungsöffnung verengbar ist.

3. Aufhängevorrichtung nach Anspruch 1,
**dadurch gekennzeichnet**,
daß die Aushubsicherung als Feder (39) ausgebildet ist und die zumindest nach Aufhängung die Einführungsöffnung verschließt.

4. Aufhängevorrichtung nach Anspruch 1,
**dadurch gekennzeichnet**,
daß als Aushubsicherung ein Schenkel (33) des Hakens der Einhängevorrichtung (32) federnd zurückgebogen ist.

5. Aufhängevorrichtung nach einem der vorhergehenden Ansprüche,
**dadurch gekennzeichnet**,
daß sie längenverstellbar ist, insbesondere durch eine Verlängerung (8), die in Führungen (11) und in Ausstanzungen (7) der Einhängevorrichtung (4) fixierbar ist.

6. Aufhängevorrichtung nach einem der vorhergehenden Ansprüche,
**dadurch gekennzeichnet**,
daß mehrere Haken (14) in verschiedener Höhe am Einhängeteil (13) angeordnet sind.

7. Aufhängevorrichtung nach einem der vorhergehenden Ansprüche,
**dadurch gekennzeichnet**,
daß der Haken (17) im Einhängebereich gegenüber dem Einhängeteil (16) flächenmäßig verbreitert ist.

8. Aufhängevorrichtung nach einem der vorhergehenden Ansprüche,
**dadurch gekennzeichnet**,
daß die Aushubsicherungen (24, 27, 40) an Flanschen (22, 23, 26, 29) angeordnet sind.

9. Aufhängevorrichtung nach einem der vorhergehenden Ansprüche,
**dadurch gekennzeichnet**,
daß der Montageansatz (9, 15, 19, 36, 41, 42, 43) als Abwinkelung am Einhängeteil (8, 13,16, 20, 28, 32, 37) angeordnet ist.

10. Aufhängevorrichtung nach einem der vorhergehenden Ansprüche,
**dadurch gekennzeichnet**,
daß der Haken (17) eine quer zum Einhängeteil (25) angeordnete Verstärkung (26) aufweist.

11. Aufhängevorrichtung nach Anspruch 10,
**dadurch gekennzeichnet**,
daß die Verstärkung (26) angeschweißt ist.

12. Aufhängevorrichtung nach Anspruch 10,
**dadurch gekennzeichnet**,
daß die Verstärkung (29) mit Hilfe von Nieten (30) befestigt ist.

13. Aufhängevorrichtung nach einem der vorhergehenden Ansprüche,
**dadurch gekennzeichnet**,
daß die bandförmige Einhängevorrichtung (32) vor der Abbiegung zum Montageansatz (36) um 90° gedreht ist, so daß im Aufhängebereich die Breite des Hakens (33) der Breite des bandförmigen Einhängeteils (32) entspricht.

## Claims

1. Suspension device for an overhead-cable fitting on a messenger cable having a hooking-in part for suspension on the messenger cable and having a mounting attachment for fastening of the overhead-cable fitting, the hooking-in part (4, 13, 16, 20, 25, 28, 32, 37) being constructed as a hook (5, 14, 17, 21, 33, 38), the hooking-in part (4, 13, 16, 20, 25, 28, 32, 37) having a withdrawal protection device (6, 24, 27, 33, 39, 40), and the mounting attachment (9, 15, 19, 36, 41, 42, 43) having a fastening flange for lateral attachment to an end sealing body of the overhead-cable fitting, characterized in that the hooking-in part (4, 13, 16, 20, 25, 28, 32, 37) is composed of material in the form of strip.

2. Suspension device according to Claim 1, characterized in that the withdrawal protection device is constructed as a screw (24, 27, 40) and is arranged such that the insertion opening can be narrowed by means of which withdrawal protection device after suspension.

3. Suspension device according to Claim 1, characterized in that the withdrawal protection device is constructed as a spring (39) and closes the insertion opening, at least after suspension.

4. Suspension device according to Claim 1, characterized in that a limb (33) of the hook of the hooking-in device (32) is bent back in a sprung manner as the withdrawal protection device.

5. Suspension device according to one of the preceding claims, characterized in that the length of said suspension device is adjustable, especially by means of an extension (8) which can be fixed in guides (11) and in stamped-out regions (7) in the hooking-in device (4).

6. Suspension device according to one of the preceding claims, characterized in that a plurality of hooks (14) are arranged at different heights on the hooking-in part (13).

7. Suspension device according to one of the preceding claims, characterized in that the hook (17) is broadened in terms of area in the hooking-in region in comparison to the hooking-in part (16).

8. Suspension device according to one of the preceding claims, characterized in that the withdrawal protection devices (24, 27, 40) are arranged on flanges (22, 23, 26, 29).

9. Suspension device according to one of the preceding claims, characterized in that the mounting attachment (9, 15, 19, 36, 41, 42, 43) is arranged as a bend on the hooking-in part (8, 13, 16, 20, 28, 32, 37).

10. Suspension device according to one of the preceding claims, characterized in that the hook (17) has a reinforcement (26) which is arranged transversely with respect to the hooking-in part (25).

11. Suspension device according to Claim 10, characterized in that the reinforcement (26) is welded on.

12. Suspension device according to Claim 10, characterized in that the reinforcement (29) is fastened with the aid of rivets (30).

13. Suspension device according to one of the preceding claims, characterized in that the hooking-in device (32), which is in the form of strip, is rotated through 90° before bending to form the mounting attachment (36), so that the width of the hook (33) in the suspension region corresponds to the width of the hooking-in part (32), which is in the form of strip.

## Revendications

1. Dispositif de suspension pour une monture de câble aérien sur un câble porteur comportant une partie d'accrochage destinée à être accrochée au câble porteur, et un embout de montage servant à fixer la monture du câble aérien, dans lequel la partie d'accrochage (4,13,16,20,25,28, 32,37) est réalisée sous la forme de crochets (5,14,17,21,33, 38), la partie d'accrochage (4,13,16,20,25,28,32,37) comporte un dispositif de protection contre un dégagement (6,24,27,33, 39,40), et l'embout de montage (9,15,19,36,41,42,43) comporte une bride de fixation permettant son montage latéral sur un corps d'étanchéité frontal de la monture de câble aérien, caractérisé par le fait que la partie d'accrochage (4,13,16,20,25,28,32,37) est en un matériau en forme de bande.

2. Dispositif de suspension suivant la revendication 1, caractérisé par le fait que le dispositif de protection contre un dégagement est sous la forme de vis (24,27,40) et est disposé de telle sorte qu'après la mise à l'état suspendu, l'ouverture d'introduction peut être rétrécie par ce dispositif.

3. Dispositif de suspension suivant la revendication 1, caractérisé par le fait que le dispositif de sécurité contre un dégagement est sous la forme d'un ressort (39) et ferme l'ouverture d'introduction, au moins après la mise en suspension.

4. Dispositif de suspension suivant la revendication 1, caractérisé par le fait qu'une branche (33) du crochet du dispositif d'accrochage (32) est recourbée élastiquement en arrière en tant que système de protection contre le dégagement.

5. Dispositif de suspension suivant l'une des revendications précédentes, caractérisé par le fait qu'il est réglable en longueur, notamment au moyen d'un prolongement (8), qui peut être immobilisé dans des guides (11) et dans des découpes (7) du dispositif d'accrochage (4).

6. Dispositif de suspension suivant l'une des revendications précédentes, caractérisé par le fait que plusieurs crochets (14) sont disposés à des niveaux différents sur la partie d'accrochage (13).

7. Dispositif de suspension suivant l'une des revendications précédentes, caractérisé par le fait que le crochet (17) s'élargit selon une certaine étendue en surface dans la zone d'accrochage, par rapport à la partie d'accrochage (16).

8. Dispositif de suspension suivant l'une des revendications précédentes, caractérisé par le fait que les dispositifs de protection contre un dégagement (24,27,40) sont disposés sur des brides (22,23,26,29).

9. Dispositif de suspension suivant l'une des revendications précédentes, caractérisé par le fait que l'embout de montage (9,15,19,36,41,42,43) est disposé sous la forme d'une partie coudée sur la partie d'accrochage (8,13,16,20,28,32,37).

10. Dispositif de suspension suivant l'une des revendications précédentes, caractérisé par le fait que le crochet (17) comporte un renfort (26) disposé transversalement à la partie d'accrochage (25).

11. Dispositif de suspension suivant la revendication 10, caractérisé par le fait que le renfort (26) est soudé.

12. Dispositif de suspension suivant la revendication 10, caractérisé par le fait que le renfort (29) est fixé à l'aide de rivets (30).

13. Dispositif de suspension suivant l'une des revendications précédentes, caractérisé par le fait que le dispositif de suspension en forme de bande (32) est tourné de 90° par rapport à l'embout de montage (36), avant le pliage, de sorte que, dans la zone de suspension, la largeur du crochet (33) correspond à la largeur de la partie d'accrochage en forme de bande (32).
